# EUROPEAN PATENT APPLICATION

(11) **EP 4 383 394 A1**
(43) Date of publication of application: **12.06.2024**
(21) Application number: 22867776.1
(22) Date of filing: 01.09.2022
(51) Int. Cl.: H01M 10/0565, H01M 50/411

(54) **GEL POLYMER ELECTROLYTE BASED ON A CROSS-LINKED POLYMER**

(30) Priority: 10.09.2021 KZ 20210549
(71) Applicant: Autonomous Organization Of Education "Nazarbayev University, Nur-Sultan 010000 (KZ)
(72) Inventor: MENTBAYEVA, Almagul Abdykalimovna, Nur-Sultan, 010000 (KZ); ZHANADILOV, Orynbay, Nur-Sultan, 010000 (KZ); SEUNG-TAEK, Myung, Seoul 05006 (KR); BAKENOV, Zhumabay Bekbolatovich, Nur-Sultan, 010000 (KZ)
(74) Representative: Yamankaradeniz, Kemal
(86) International application number: PCT/KZ2022/000013
(87) International publication number: WO 2023/038508

(57) **Abstract**

The invention relates to the electrochemical industry, in particular to gel polymer electrolytes for rechargeable water batteries. The aim of the invention is to create a chemically cross-linked gel polymer electrolyte for secondary water batteries, which increases the electrochemical stability of water, thereby expanding the operating voltage range. The technical result of the invention is to expand the operating voltage range by means of a chemically cross-linked gel polymer electrolyte for secondary water batteries. It provides high electrochemical stability and high ionic conductivity. This technical result is achieved due to the fact that the invention proposes a cross-linked polymer, which consists of acrylamide - (AA), [2-(Methacryloyloxy)ethyl]dimethyl-(3-sulfopropyl) (DMAPS) and N, N'-methylenebisacrylamide (MBA). AA and DMAP are monomers, and MBA is the coupling agent. An aqueous solution of an electrolyte salt in the structure of a cross-linked polymer to form a quasi-solid gel electrolyte material. The cross-linked polymer gel electrolyte is designed to be used both as a separator and as an electrolyte. It is placed between the negative (anode) and positive (cathode) electrodes. As a separator it prevents direct contact between the electrodes, and as an electrolyte it provides a medium in which ions pass from one electrode to another or from electrode to electrolyte and vice versa. The AA amide group, cationic and anionic groups of DMAP provide high ionic conductivity and strong water holding capacity in the cross-linked polymer gel electrolyte. The invention, due to its high ionic conductivity, has high reversibility of the electrochemical reaction and high electrochemical stability due to the retention of water in the hydrophilic structure.

## Description

This invention relates to the electrochemical industry, in particular to gel polymer electrolytes for rechargeable water batteries.

The rapid production growth of clean energy is commensurately increasing the demand for large-scale energy storage systems, where low cost and high fire safety are critical. Modern commercial technologies based on lithium-ion batteries (LIB) are still expensive despite the fact that their price is gradually decreasing [Ziegler, Energy Environ. sci. 2021,14, 1635-1651], and most importantly, LIBs have a serious fire safety problem due to the use of flammable organic solvents [Diaz et al, J. Electrochem. Soc. 2020, 167, 090559]. Aqueous batteries are made using promising technology for large-scale energy storage systems because they have important characteristics such as low cost, environmental friendliness and non-flammable materials. These advantages have led to diverse research towards advanced aqueous batteries with a variety of electrodes and multiple electrolytes, which can be used in a variety of applications, from flexible and wearable devices to large-scale energy storage systems [A. J. F. Romero and others, Polymers 2020, 12, 2812].

However, aqueous batteries have a number of disadvantages that hinder the commercialization of various rechargeable aqueous battery technologies. One of them is the narrow window of electrochemical stability of water, i.e., limited operating voltage. Water is used as a solvent and has a narrow difference between the oxidation potential, where the oxygen evolution reaction occurs, and the reduction potential, where the hydrogen evolution reaction occurs, which differ from each other by a voltage window of 1.23 V [S.Z. Qiao et al., Science Advances 2020, 6, 21, eaba4098]. This narrow window of electrochemical stability limits the operating potential of the battery, resulting in insufficient energy density and reducing the number of usable electrode pairs for a stable electrochemical battery. The most studied aqueous battery system is a cell with an electrode pair of a zinc metal anode and a manganese dioxide cathode, which have a potential difference of about 2 volts [C. Zhi et al, Current Opinion in Electrochemistry 2021, 30, 100769, 2451-9103]. Although there are various water-in-salt electrolyte technologies that solve the problem of narrow operating potential, however, this type of electrolyte significantly increases the cost of a water battery, making it an unattractive solution [G. Balakrishna et al, Sustainable Energy Fuels 2021, 5, 1619-1654].

One possible solution is to replace liquid electrolytes with a composite based on a polymer gel electrolyte. Gel polymer electrolytes have a porous structure of hydrophilic polymer chains filled with an aqueous electrolyte. Polymer gels, in addition to flexibility, mechanical strength, high ionic conductivity and the protective effect of the metal zinc anode, can increase the electrochemical stability of water, thereby expanding the operating window of aqueous batteries [A. J. F. Romero et al, Polymers 2020, 12, 2812]. The above-mentioned advantages are associated with chemically cross-linked polymers and polyacrylamide-based polymer gel electrolytes are the most promising option because they have a strong hydrophilic amide group [Z. Niu et al, Chem. Eur. J. 2019, 25, 14480 -14494]. The electrochemical stability of water is achieved by trapping water molecules in the structure of a cross-linked polymer gel, and amide groups enhance this trapping ability [T. Shikata, Phys. Chem. Chem. Phys. 2014, 16, 13262-13270]. In addition, the polymer gel electrolyte and especially polyacrylamide-based polymer gels can be modified by various methods such as grafting, copolymerization, double cross-linking, etc. There is a promising gel electrolyte based on poly(acrylamide-co-[2-(methacryloyloxy) ethyl] dimethyl-3-sulfopropyl) crystalline type proposed by Q. Wang et al. [Adv. Mater. 2019, 1900248] for supercapacitor systems. The proposed copolymer was obtained by polymerization in an electrolyte solution. The second component of the copolymer is [2-(Methacryloyloxy)ethyl]dimethyl-(3-sulfopropyl), which has a zwitterionic structure, meaning that it contains positive and negative ionic charges in the same monomer, which provide benefits such as high ionic conductivity and powerful water retention capacity, making an operating voltage window of up to 2.4 volts achievable [S. N. Chung et al, ElectrochimicaActa 2019, 319, 672-681]. The disadvantage of this analogue is the inability to use the electrolyte at a voltage above 2.4 V.

There is an invention (No. US010957939B2, 2021) related to a polyacrylamide hydrogel electrolyte for flexible zinc-ion batteries containing only acrylamide in a cross-linked polymer matrix. The disadvantage of this analogue is the lack of any information on the possible use of polyacrylamide hydrogel electrolyte in the potential range above 2 volts.

In the present invention, the cross-linked copolymer gel electrolyte for aqueous batteries is composed of acrylamide and [2-(methacryloyloxy)ethyl]dimethyl-(3-sulfopropyl) monomers, which are polymerized in an aqueous electrolyte solution.

**The aim of the invention** is to create a chemically cross-linked gel polymer electrolyte for secondary water batteries, which increases the electrochemical stability of water, thereby expanding the operating voltage range.

**The technical result consists in** expanding the operating voltage range by means of a chemically cross-linked gel polymer electrolyte for secondary water batteries. It provides high electrochemical stability and high ionic conductivity.

**This technical result is achieved due** to the fact that the invention proposes a cross-linked polymer, which consists of acrylamide (AA), [2-(Methacryloyloxy)ethyl]dimethyl-(3-sulfopropyl) (DMAPS) and N, N'-methylenebisacrylamide (MBA ). AA and DMAP are monomers and MBA is the coupling agent. An aqueous solution of an electrolyte salt in the structure of a cross-linked polymer to form a quasi-solid gel electrolyte material. The cross-linked polymer gel electrolyte is designed to be used both as a separator and as an electrolyte. It is placed between the negative (anode) and positive (cathode) electrodes. As a separator it prevents direct contact between the electrodes, and as an electrolyte it provides a medium in which ions pass from one electrode to another or from electrode to electrolyte and vice versa. The AA amide group, cationic and anionic groups of DMAP provide high ionic conductivity and strong water holding capacity in the cross-linked polymer gel electrolyte.

The invention, due to its high ionic conductivity, has high reversibility of the electrochemical reaction and high electrochemical stability due to the retention of water in the hydrophilic structure. A gel polymer electrolyte consists of a chemically cross-linked copolymer matrix with an aqueous electrolyte solution trapped within the matrix. A copolymer consisting of acrylamide and [2-(Methacryloyloxy)ethyl]dimethyl-(3-sulfopropyl) monomers or their derivatives, and the cross-linking agent N, N'-methylenebisacrylamide. Electrolyte salts, as well as persulfate salts, can be used as a free radical polymerization initiator, both together and separately. Polymerization can be carried out in aqueous solution or directly in electrolyte solutions, followed by drying and immersion in the electrolyte, immersion without drying, or use without immersion.

This invention will be used in water batteries as a cross-linked copolymer gel electrolyte and separator with a quasi-solid structure. The electrolyte is located between the anode and cathode electrodes, separates them, and provides an aqueous environment for the ions. It provides high electrochemical stability and high ionic conductivity.

Accordingly, embodiments of the present invention provide solutions to the limited operating potential window of aqueous batteries using a cross-linked polymer gel electrolyte.

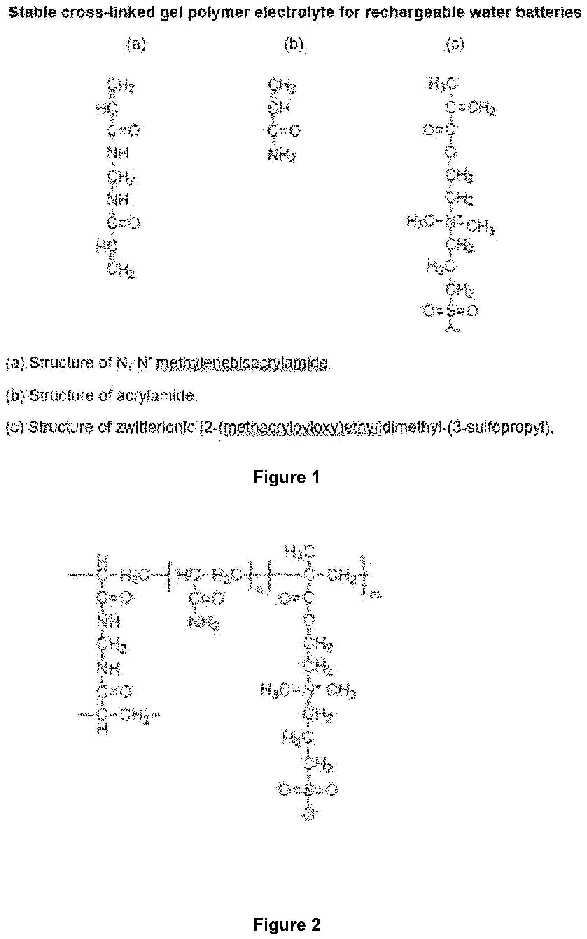

The invention is a quasi-solid cross-linked polymer matrix containing a dissociated salt in the structure. The cross-linked polymer consists of acrylamide (AA), [2-(Methacryloyloxy)ethyl]dimethyl-(3-sulfopropyl) (DMAPS) and N,N'-methylenebisacrylamide (MBA), the structures of the components are shown in figure 1. AA and DMAP are monomers, and MBA is the binding agent. The structure of a cross-linked polymer is shown in Figure 2. An aqueous solution of an electrolyte salt in the structure of a cross-linked polymer to form a quasi-solid gel electrolyte material. The cross-linked polymer gel electrolyte is designed to be used both as a separator and as an electrolyte. It is placed between the negative (anode) and positive (cathode) electrodes. As a separator it prevents direct contact between the electrodes, and as an electrolyte it provides a medium in which ions pass from one electrode to another or from electrode to electrolyte and vice versa. The AA amide group, cationic and anionic groups of DMAP provide high ionic conductivity and strong water holding capacity in the cross-linked polymer gel electrolyte. The invention, due to its high ionic conductivity, has high reversibility of the electrochemical reaction and high electrochemical stability due to the retention of water in the hydrophilic structure.

Thermocatalytic free radical polymerization of monomers AA, DMAPS and cross-linker MBA is used to obtain a cross-linked copolymer matrix. This matrix is a container for one or a mixture of various electrolyte solutions of varying concentrations, such as zinc sulfate, zinc trifluoromethanesulfonate, zinc perchlorate, zinc chloride, zinc nitrate and other electrolyte salts. To obtain a cross-linked gel-electrolyte copolymer, the copolymer is immersed in an electrolyte solution. The thickness and shape of the resulting material depend on the design of the mold.

Embodiments of the invention will be described in detail below by way of examples, which are illustrated in the accompanying drawings. In the figures, similar structures and/or compositions will be identified using identical reference symbols.

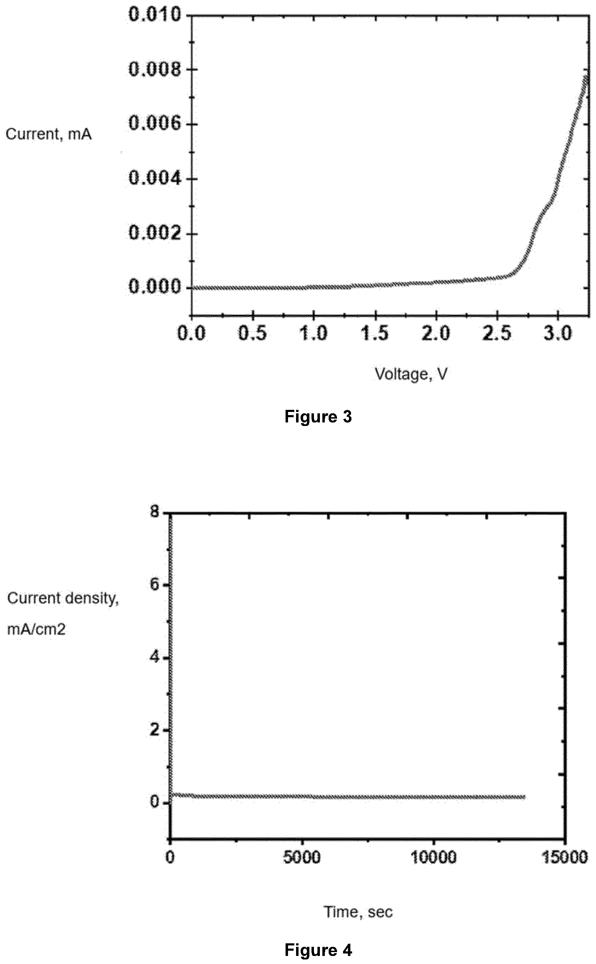

To carry out electrochemical tests, a symmetrical Swagelok cell made of carbon electrodes was used. Electrochemical linear voltammetry test of the cross-linked copolymer gel electrolyte from Preparation Example 1 shows high electrochemical stability up to 2.6 volts (Figure 3), after which the oxygen evolution reaction begins. The chronoamperometric test (Figure 4) at a constant potential of 2.2 volts shows the stability of the polymer gel electrolyte without significant changes in current.

A rechargeable water battery based on a cross-linked copolymer gel electrolyte consists of current leads, active materials of the anode and cathode electrodes, a binder and carbon conductive additives for active materials. The current conductor for a water battery can be any electrically conductive materials. The current lead for a water battery with an operating voltage window above 2 volts can be made of titanium metal or carbon-based materials such as carbon paper, carbon nanotube paper, carbon fabric, graphite, and others. The anode and cathode may be any suitable active material.

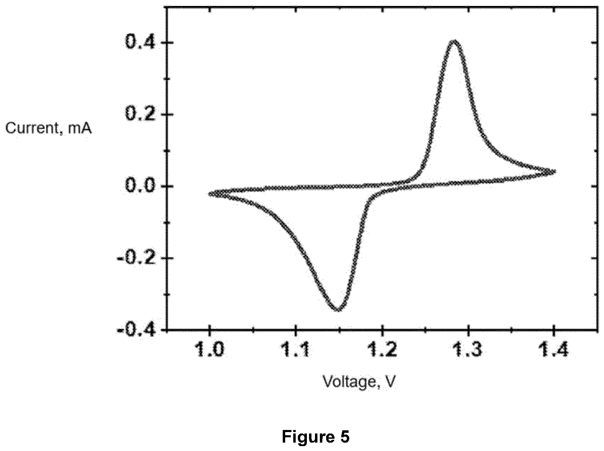

The cross-linked polymer gel electrolyte rechargeable aqueous battery of the example battery used for cyclic voltammetry testing (Figure 5) exhibits the usual cathodic and anodic reaction pairs of these electrodes without any additional reactions.

### Brief description of the drawings

The accompanying drawings, which are included in and constitute a part of the specification, illustrate embodiments of the present invention and explain the principles of the invention in addition to the description.
Figure 1 shows an example of the structure of the components used for the cross-linked copolymer gel electrolyte. Shown is 1 - the structure of N, N'-methylenebisacrylamide, 2 - the structure of acrylamide and 3 - [2-(Methacryloyloxy)ethyl]dimethyl-(3-sulfopropyl).
Figure 2 shows an example of the structure of a cross-linked copolymer. Shown is 1 - N,N'-methylenebisacrylamide cross-linking agent, 2 - polyacrylamide, 3 - poly-[2-(Methacryloyloxy)ethyl]dimethyl-(3-sulfopropyl).
Figure 3 shows the linear voltammetric test curve of a cross-linked copolymer gel electrolyte with 2 M ZnSO4 electrolyte salt solution as an example. The electrochemical test was carried out in a symmetrical cell of carbon electrodes with a potential change rate of 1 mV/s. The cross-linked gel polymer electrolyte was prepared as described in Preparation Example 1.
Figure 4 shows the chronoamperometric test curve at a constant voltage of 2.2 V of a cross-linked copolymer gel electrolyte with 2 M ZnSO4 electrolyte salt solution as an example. The electrochemical test was carried out on a symmetrical cell of carbon electrodes. The cross-linked gel polymer electrolyte was prepared as described in Preparation Example 1.
Figure 5 shows the cyclic voltammetry test curve of Zn electrolyte/crosslinked polymer gel with 2M ZnSO4 and 2M LiCl electrolyte/LiFePO4 battery. A cross-linked gel polymer electrolyte was prepared using the preparation given in Example 2. The battery was assembled in the manner described in the battery example.

### Preparation example No. 1

1 g of AA monomer powder and 1 g of DMAPS monomer powder are added to 8 ml of deionized water and stirred until completely dissolved. Then 0.001 g of crosslinking agent is added to the solution and dissolved. The solution is thoroughly purged with pure argon with constant stirring for at least 30 minutes to remove dissolved oxygen. Then 0.005 g of the initiator of free radical polymerization of potassium persulfate is added to the solution, dissolved and the final solution must be stirred for 1 hour at a temperature not exceeding 25°C with further degassing in a vacuum chamber until bubbles no longer form in the solution or 15-minute ultrasonic stirring at room temperature. The degassed solution is transferred into a glass mold with a thickness of 0.5 mm and kept at a temperature of 60°C for 3 hours. The resulting cross-linked copolymer gel is dried at 60°C in a vacuum chamber to obtain a dried film, which is then immersed in a 2 mol/liter electrolyte solution ZnSO4 for 24 hours. A quasi-solid cross-linked gel polymer electrolyte was obtained.

### Preparation example No. 2

A quasi-solid cross-linked gel polymer electrolyte was prepared in the same manner as described in Preparation Example 1, except that the electrolyte solution consisted of 2 moles/liter ZnSO4 and 2 moles/liter LiCl.

### Preparation example No. 3

A quasi-solid cross-linked gel polymer electrolyte is prepared in the same manner as described in Preparation Example 1, except that 8 ml of deionized water is replaced with a 2.5 mol/L Zn(CF3SO3)2 electrolyte solution, purging the electrolyte solution with argon before adding AA, and DMAPS, remove the polymerization initiator potassium persulfate, induce Zn(CF3SO3)2, initiate free radical polymerization, and after the polymerization process, the next step is immersion in 2.5 mol/L Zn(CF3SO3)2.CF3SO3)2 solution without drying.

### Battery Example

A rechargeable aqueous battery is assembled by assembling a cathode, a cross-linked copolymer gel electrolyte, and an anode into a battery cell. A metal zinc anode with a thickness of 0.5 mm was used as is without additional processing. Zinc metal is also used as an anodic current collector. A commercial LiFePO4 cathode (MTI corp.) is mixed with acetylene black powder and polyvinylidene fluoride (PVDF) binder in a mass ratio of 90:6:4, respectively. The mixture was dissolved in the organic solvent N-methyl-2 pyrrolidone (NMP), and the resulting suspension was cast onto a carbon paper pantograph and dried. The resulting cathode has a mass distribution of the active substance of about 3-4 mg/cm2. A cross-linked gel polymer electrolyte was obtained using the preparation given in example 2.

## Claims

1. Gel polymer electrolyte (GPE) based on a cross-linked copolymer for rechargeable water batteries, **characterized in that** the copolymer is formed from two or more types of monomers, such as acrylamide (AA) and [2-(methacryloyloxy)ethyl]dimethyl-(3- sulfopropyl) ammonium hydroxide (DMAPS) and their derivatives, as well as the crosslinking agent N, N'-methylenebisacrylamide (MBA).

2. Gel polymer electrolyte, according to the claim 1, **characterized in that** the content of deionized water is controlled in the range from 5% to 80% by varying the total mass percentage of the monomers acrylamide (AA) and [2-(Methacryloyloxy)ethyl]dimethyl-(3-sulfopropyl) ammonium hydroxide (DMAPS) to the total mass of the precursor solution.

3. Gel polymer electrolyte, according to the claim 1, **characterized in that** the mass percentage of AA : DMAPS monomers can be from 95:5 to 5:95.

4. Gel polymer electrolyte, according to the claim 1, **characterized in that** the mass percentage of the MBA cross-linking agent relative to the total mass of AA and DMAPS monomers varies from 0.05% to 5%.

5. Gel polymer electrolyte, according to the claim 1, **characterized in that** it comprise an aqueous solution of one or a combination of electrolyte salts of various concentrations having the formula M+X" where:
**M⁺** is Zn²⁺, Mn²⁺, Li⁺, Co²⁺
X is Cl⁻, SO₄²⁻, NOs-, ClO₄⁻, CF₃SO₃; OH⁻
